# EUROPEAN PATENT APPLICATION

(11) **EP 2 216 207 A2**
(43) Date of publication of application: **11.08.2010**
(21) Application number: 09171346.1
(22) Date of filing: 25.09.2009
(51) Int. Cl.: B60R 13/02

(54) **Covered door panel having an aperture and method of manufacturing same**

(30) Priority: 06.02.2009 US 366875
(71) Applicant: International Automotive Components Group North America, Inc., Dearborn, MI 48126 (US)
(72) Inventor: Bush, Thomas K., Harrison Township, MI 48045 (US); Reed, Randy S., Fair Haven, MI 48023 (US)
(74) Representative: Liesegang, Eva

(57) **Abstract**

A panel includes a bolster and a covering. The bolster has a bolster aperture formed therethrough that includes a pleat notch portion. The covering is positioned on the bolster and has a covering aperture formed therethrough that is aligned with the bolster aperture. The covering includes a pleated seam that is received in the pleat notch portion of the bolster aperture.

## Description

### BACKGROUND OF THE INVENTION

This invention relates in general to a panel that has an aperture formed therethrough and that is covered by a material. In particular, this invention relates to an improved structure for a vehicular door panel that has an aperture formed therethrough and that is covered by a stitched seam portion of a covering and to a method of manufacturing same.

Panels are generally planar structures that are often positioned over articles having recessed spaces so as to conceal objects contained within such recessed spaces. Panels can also be used to support one or more mechanisms thereon and may be provided with one or more apertures therethrough that permit access by the supported mechanisms to the concealed objects contained within the recessed spaces. One commonly known example of such a panel is a vehicle door panel, wherein the panel extends over a recessed space defined by a vehicle door. The vehicle door panel has one or more apertures formed therethrough that permit access by mechanisms supported thereon (such as door handles, window control switches, door lock actuators, and the like) to respective actuators contained within the recessed space of the vehicle door panel.

Vehicle door panels and other panels often have a bolster or substrate that is covered by a covering to provide a protective layer, a comfortable tactile characteristic, and an aesthetic appearance. The covering may be made from various materials, such as leather, cloth, canvas, velour, polymer fabrics (such as, for example, vinyl fabric), and the like. The covering may be assembled from several pieces of material that are stitched together to form decorative patterns or include wear resistant surfaces over the door panel. The covering is then applied to the bolster, often with the seams in a specific orientation. In some instances, grooves are formed in the bolster to aid in orienting the covering and the seams in a desired manner. It may also be desirable to locate the aperture on a seam for component proximity or aesthetic reasons.

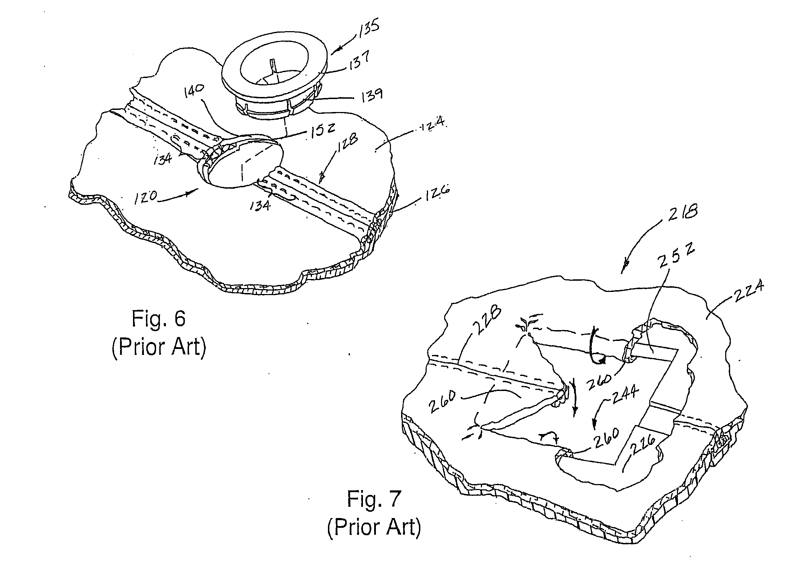

During the manufacture of a typical vehicle door panel, the pieces of material that make up the covering are sewn by a variety of stitches and techniques. The seams may be formed in a variety of configurations such as, for example, plain seams, French seams, seams with welting, beaded seams, flat-felled seams, curved seams, deck seams, plow seams, and the like. French seams, for example, have a binding seam that is stitched along an edge to attach the sections of material together. A seam allowance is a generally short portion of material that extends between the binding seam and the section edge. Each piece of the seam allowance is then folded back and stitched to the back of the material section with a hem stitch. The bolster is then covered with material, which is initially oriented in a desired manner and then located in a press to form the apertures. The apertures formed through the bolster and the covering have the same size, as shown in prior art Fig. 6, and may be punched or stamped therein. Alternatively, the material of the covering may be cut to form several flaps and then positioned over the bolster and aperture. The flaps are then tucked under the bolster to expose the underlying aperture, as shown in prior art Fig. 7.

To prevent the stitching from unraveling or coming apart at the seams, the ends of the seams are sometimes terminated with a back tack stitch. A typical back tack stitch is the same as the hem stitch, but is applied in a reverse direction for three or more individual stitches that usually extend about twelve millimeters, although the actual length may vary. The back tack section may exhibit a bulkier thread pattern and/or a wrinkled material profile, making it less aesthetically pleasing than the main portion of the seam. When the aperture is located on the seam, the seam back tack stitching is typically hidden, either by tucking extra material behind the bolster or providing a concealment flange on a mating bezel or having the attached component overlap the seam and back tack.

The seam may have a thickness often greater than the base material thickness. The seam thickness may be increased at the ends because of additional material that is provided to hide the back tack stitching. This added thickness may be significant, especially when applied to thick and relatively stiff materials such as leather or heavy vinyl. Tucking the back tack material around the aperture perimeter may produce a non-uniform opening due to the displaced thicker seam material. Such a non-uniform aperture perimeter may produce an unsightly component finish or interfere with the mating hardware. Additionally, the seam may shift relative to the aperture perimeter. If a mating component (such as an armrest) also has a seam, then misalignment of the seams may occur, which can reduce the aesthetic appearance of the panel. This situation is especially pronounced where highlighting or accent colored stitching is used.

Cutting through the seam and cover while leaving a back tack stitch on either end that terminates at the aperture may result in a wide flange on the component or bezel to conceal the back tack. These wider flanges restrict the design options afforded to vehicle interior designers. For example, when orienting an arm rest that includes a door handle mechanism, the hole accommodating the handle linkage may need to be located close to the arm rest edge. Thus, it would be desirable to have a seam and aperture arrangement capable of being concealed with less overlap or positioned closer to an edge. It would be further desirable to provide a bolster that may better maintain a desired seam pattern and alignment with the aperture.

### SUMMARY OF THE INVENTION

This invention relates to a panel that includes a covering having a pleated seam and a covering aperture formed therethrough. The pleated seam has at least one tab. The panel also includes a bolster having a bolster aperture formed therethrough. The bolster aperture is aligned with the covering aperture. The bolster aperture has at least one pleat notch portion formed therein. This invention further relates to a method of forming the panel including the steps of providing a covering and a bolster and sewing a pleated seam into the covering. A first aperture is formed into the covering such that the covering aperture intersects the pleated seam. A second aperture is formed through the bolster and has a pleat notch portion. The covering is then located on the bolster such that the first aperture is generally aligned with the second aperture. The first aperture includes a tab that is passed through the second aperture in alignment with the pleat notch portion.

Various aspects of this invention will become apparent to those skilled in the art from the following detailed description of the preferred embodiment, when read in light of the accompanying drawings.

### BRIEF DESCRIPTION OF THE DRAWINGS

Fig. 1 is a front elevational view of a door including a door panel having an aperture and seam arrangement in accordance with this invention.

Fig. 2 is an enlarged exploded perspective view of portions of a bolster and a covering for the door panel illustrated in Fig. 1.

Fig. 3 is a further enlarged sectional elevational view of portions of the bolster and the covering illustrated in Fig. 2 shown in a partially assembled condition.

Fig. 4 is an enlarged sectional elevational view similar to Fig. 3 showing the bolster and the covering in an assembled condition.

Fig. 5 is a sectional elevational view taken along line 5-5 of Fig. 4.

Fig. 6 is a perspective view of a portion of a first hole and seam arrangement for a panel that is known in the art.

Fig. 7 is a perspective view of a portion of a second hole and seam arrangement for a panel that is known in the art.

### DETAILED DESCRIPTION OF THE PREFERRED EMBODIMENT

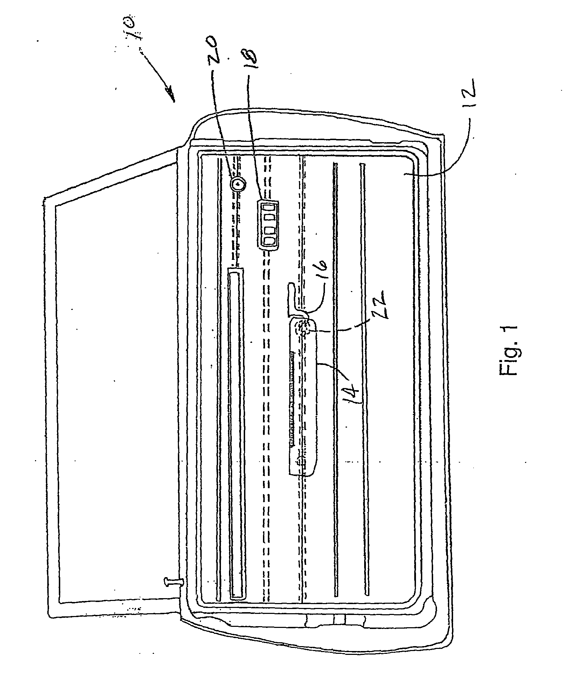

Referring now to the drawings, there is illustrated in Fig. 1 a vehicle door, indicated generally at 10, that includes a door panel 12 in accordance with this invention. The illustrated door panel 12 is part of a vehicle interior system that may include additional panels including, for example, headliners, seats and seating components, instrument panels, consoles, and the like. Although this invention will be described in the context of illustrated vehicle door 10, it will be appreciated that this invention is not intended to be limited to either vehicles or doors. On the contrary, this invention may used in any environment for the purposes described herein.

The illustrated door panel 12 includes an armrest assembly 14 that supports a door handle 16, a first switch assembly 18, and a second switch assembly 20. The illustrated door panel 12 also includes a panel aperture 22 that is formed therethrough and is located behind the armrest assembly 14. The panel aperture 22 allows access through the door panel 12 to a recessed space (not shown) defined by the vehicle door 10. For example, a portion of the door handle 16 may extend through the panel aperture 22 in order to actuate a door lock assembly (not shown). The first and second switch assemblies 18 and 20, respectively, are intended to represent examples of more specific environments that may be used in connection with this invention. The first and second switch assemblies 18 and 20, respectively, may be of any size or shape, may be used for any purpose, and may be located in any desired location. For example, the panel 12 may be embodied as an instrument panel having a cluster that includes gauges, lights, and displays; an overhead console having access doors, switches, and/or light sources; or a seating system component having center armrests, consoles, switches, and the like.

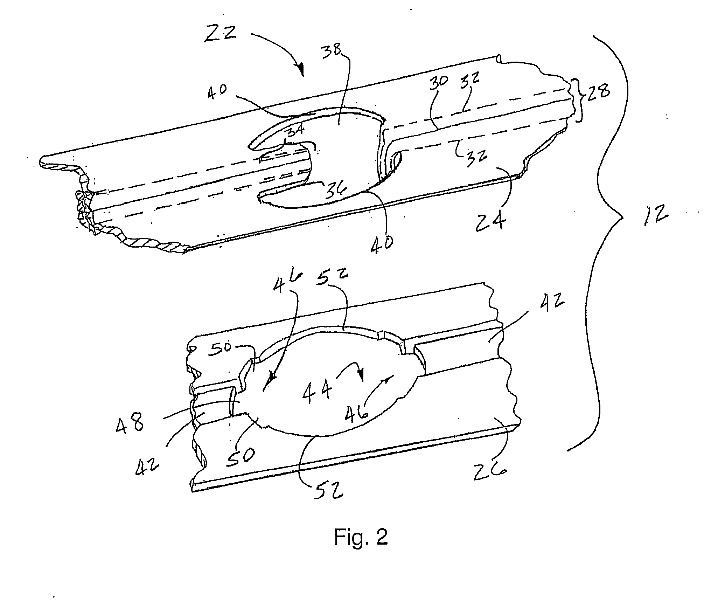

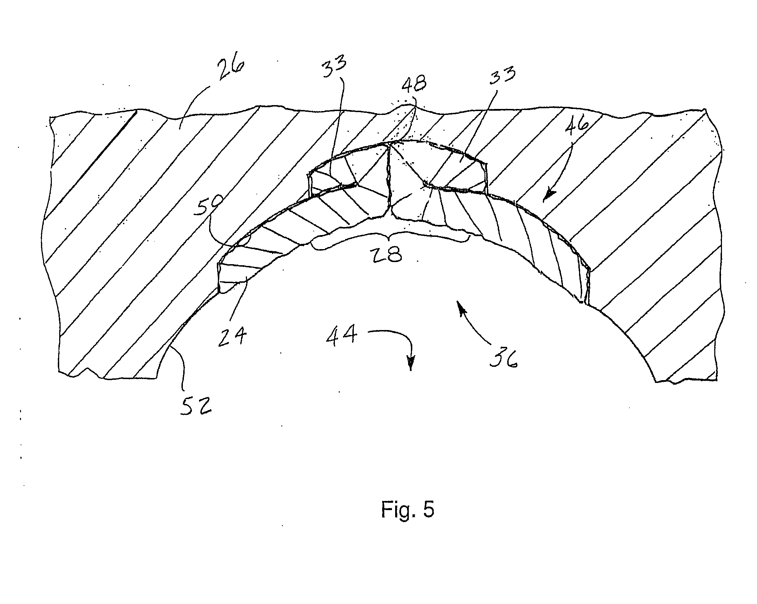

Fig. 2 is an enlarged exploded perspective view of portions of a covering 24 and a bolster 26 for the door panel 12 illustrated in Fig. 1. The covering 24 may be formed from any desired material, such as leather, cloth, canvas, velour, polymer fabrics (such as, for example, vinyl fabric), and the like. The covering 24 may be formed from a single piece of material or may be assembled from several pieces of material. The illustrated covering 24 includes a pleated seam 28 having a binding seam 30 located at or about the center of the pleated seam 28. The binding seam 30 is shown securing two sections of the covering 24 together and is approximately twice the material thickness of the covering 24. A seam allowance 33 (see Fig. 5) may be provided that extends beyond the binding seam 30 terminating in cut ends of the covering 24, but such is not required. The pleated seam 28 may further include a hem 32 located on either side or both sides (as illustrated) of the binding seam 30. The hem 32 may secure the seam allowance 33 to the covering 24, if so provided. The pleated seam 28 may be any variety of stitched or bonded seam known in the art. The pleated seam 28 is further illustrated having two hems 32 spaced apart from the binding seam 30. However, any number of hems 32 may be provided in any orientation and for structural or aesthetic purposes if so desired.

The illustrated hem 32 is terminates in a back tack 34. Alternatively, the pleated seam 28 may also terminate in the back tack 34. The back tack 34 is a relatively short series of individual stitches provided to prevent the stitching of the pleated seam 28 or hems 32 from unraveling at the ends. The back tack 34 may be formed continuously with the hem 32 or may be a separate stitched structure. The back tack 34 may be provided as, for example, three stitches, although more or less in number may be provided if so desired. The back tack 34 may be approximately ten to fifteen millimeters in length along the hem 32, although such is not required. The back tack 34 is located on a tab 36. The tab 36 forms a portion of the perimeter of a covering aperture 38 such that the pleated seam 28 is part of the tab 36 and intersects with the covering aperture 38. The perimeter of the covering aperture 38 may include a covering perimeter section 40 having substantially the same geometric shape as the panel aperture 22 of the door panel 12. Although illustrated as having two tabs 36 that are substantially symmetrical, the covering 24 may have any desired number of tabs 36. The tabs 36 may also be asymmetrically shaped if desired. The tab 36 is configured to accommodate at least the width of the pleated seam 28. Alternatively, the tab 36 may be wider to include the hemmed seam allowance 33, when so provided, and may further include a portion of the covering 24 that is not pleated or hemmed.

The bolster 26 of the door panel 12 may include an alignment groove 42, although such is not required. The bolster 26 may also have a bolster aperture 44 formed therethrough. The bolster aperture 44 includes a pair of tab notches, each indicated generally at 46, that forms part of the perimeter of the bolster aperture 44. The purpose of tab notches 46 will be explained below. Although illustrated as having two tab notches 46 that are substantially symmetrical, the bolster aperture 44 may have any number of tab notches 46, which may also be asymmetrical. Preferably, the number of tab notches 46 is the same as the number of tabs 36. The tab notch 46 includes a pleat notch portion 48 and a cover notch portion 50. Although shown as having two cover notches 50 that are spaced apart on either side of the pleat notch portion 48, such is not required. The pleat notch portion 48 is shown aligned with the alignment groove 42, if so provided.

The perimeter of the bolster aperture 44 may include a bolster perimeter section 52, shown spaced between the tab notches 46, having substantially the same geometric shape as the panel aperture 22 of the door panel 12. Thus, the bolster perimeter section 52 of the bolster aperture 44 is also substantially the same shape as the corresponding covering perimeter section 40 of the cover aperture 36. The total perimeter of the bolster aperture 44 (including the tab notches 46 and the bolster perimeter section 52), however, is shaped differently when compared to the corresponding total perimeter of the cover aperture 38.

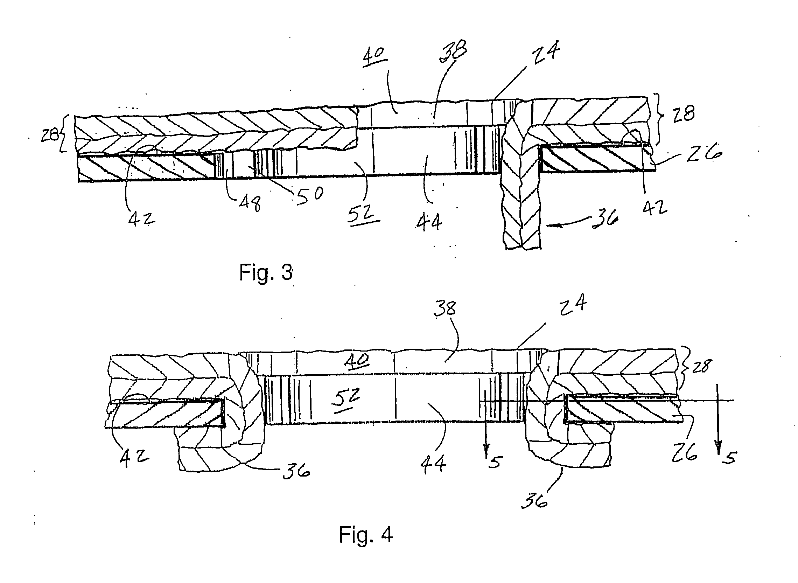

Referring now to Figs. 3 and 4, the covering 24 is shown positioned on the bolster 26. One of the tabs 36 is shown as bent downwardly and extending through the bolster aperture 44. The pleated seam 28 is positioned in the alignment groove 42. The other tab 36 is then folded to extend through the bolster aperture 44, as shown in Fig. 4. The ends of the tabs 36 are further folded underneath the bolster 26. The term "underneath" is intended to represent the side of the bolster 26 that is opposite the side contacting the covering 24 (i.e., the side that faces toward the recessed space defined in the door 12). The ends of the tabs 36 may be secured underneath the bolster 26 by staples, adhesives, rivets, screws, stitching, and the like, although such is not required. Additionally, the tabs 36 may be held in place by the mating structure such as, for example, the armrest 14 or the door handle 16 that engage the door panel aperture 22, if so desired.

Referring now to Fig. 5, the tab 36 is shown positioned within the tab notch 46. The pleated seam 28 is located at the pleat notch portion 48 of the tab notch 46. The pleat notch portion 48 of the tab notch 46 preferably abuts or is in close proximity to a portion of the pleated seam 28. The depth of pleat notch portion 48 of the tab notch 46 is preferably approximately twice the material thickness of the covering 24. The depth of the cover notch portions 50 of the tab notch 46 may be substantially the same as one material thickness of the covering 24. This allows the surface of covering 24 that is exposed to the bolster aperture 44 to conform to the bolster perimeter section 52. The pleat notch portion 48 of the tab notch 46 cooperates with the pleated seam 28 to prevent shifting or undesired movement of the tab 36 and the pleated seam 28 relative to the perimeter of the bolster aperture 44 and the alignment groove 42. Thus, where the armrest 14 includes a mating seam, the armrest seam is substantially aligned with the pleated seam 28 upon assembly of the door panel 10. The portion of the covering 24 that extends beyond the pleated seam 28 is positioned within the cover notch portions 50 of the tab notch 46.

The covering 24 may be aligned and assembled onto the bolster 26 by any suitable method. One example of such an assembly operation is to provide a fixturing jig having a locating structure that orients the tabs 36 of the covering 24 relative to the bolster aperture 44 of the bolster 26. The fixturing jig may have a surface topography, such as for example a generally planar surface, that supports the bolster 26. The fixturing jig may include one or more locating datums, such as two spaced apart dowels (not shown), that may extend through the bolster aperture 44 and engage portions of the tabs 36. The dowels may locate in apertures (not shown) formed through the tabs 36. The locating datum may include a feature to position the bolster aperture 44 relative to the dowels and align the tabs 36 relative thereto. However, any alignment structure may be used to position the covering 24 relative to the bolster 26. Once the panel sections have been oriented on the fixturing jig, the datum points may be retracted or otherwise disengaged from the covering 24 to allow the tabs 36 to be secured to the bolster 26 as described above.

Referring now to Fig. 6 there is a prior art door panel aperture illustrated as a stamped aperture, shown generally at 120. The prior art stamped aperture 120 is illustrated as accommodating an actuating structure similar to the second switch assembly 20 shown in Fig. 1. The prior art stamped aperture 120 is typically formed by first providing a covering 124 having a pleated seam 128 and a bolster 126. The pleated seam 128, which includes a back tack 134, is positioned in a desired location over the bolster 126. The back tack 134 may be a pair of spaced apart back tacks 134 which are positioned on either side of the intended location of the stamped aperture 120. The stamped aperture 120 is then formed, typically by cutting or stamping, into both the covering 124 and the bolster 126. The stamped aperture 120 has the characteristic that a covering perimeter 140 is substantially the same dimension as a bolster perimeter 152 throughout the full circumference or perimeter. A bezel 135 having a trim lip 137 and a body 139 is inserted into the stamped aperture 120. The trim lip 137 is sufficiently larger in diameter than the body 139 in order to conceal exposed portions of the back tack 134.

Referring now to Fig. 7 there is a prior art door panel aperture illustrated as a folded flap aperture, shown generally at 218. The prior art folded flap aperture 218 is illustrated as accommodating an actuating structure similar to the rectangular switch assembly 18 of Fig. 1. The folded flap aperture 218 is typically formed by first forming a bolster aperture 244 through a bolster 226. The bolster aperture 244 is generally formed to be larger than the desired final aperture size. Thus, the resulting folded flap aperture 218 is smaller in dimension than the bolster aperture 244. A covering 224 having a pleated seam 228 is placed over the bolster 226. The pleated seam 228 is aligned with the bolster aperture 244 as desired. A plurality of flaps 260 are formed by cutting the covering 224, for example, from one corner to a diagonally opposite corner. A second cut is formed between the remaining two corners. Bolster apertures having different shapes may have fewer of more flap structures formed therein, as desired. The resulting X-shaped cut forms four flaps 260 that extend over the bolster aperture 244, as shown in Fig. 7. The flaps 260 are each folded over a bolster perimeter 252, that extends around the bolster aperture 244 formed through the bolster 226. The flaps 260 are typically folded in the direction of the arrows of Fig. 7. The bolster perimeter 252 is covered by the flaps 260, which may be subsequently anchored to portions of the bolster 226.

The principle and mode of operation of this invention have been explained and illustrated in its preferred embodiment. However, it must be understood that this invention may be practiced otherwise than as specifically explained and illustrated without departing from its spirit or scope.

## Claims

1. A panel comprising:
a bolster having a bolster aperture formed therethrough that includes a pleat notch portion; and
a covering positioned on the bolster and having a covering aperture formed therethrough that is aligned with the bolster aperture, the covering including a pleated seam that is received in the pleat notch portion of the bolster aperture.

2. The panel of Claim 1 wherein the covering aperture defines a perimeter having a tab that includes the pleated seam.

3. The panel of Claim 2 wherein the tab includes a portion of the covering adj acent to the pleated seam, and wherein the bolster aperture includes a cover notch portion adjacent to the pleat notch portion that receives the covering portion of the tab.

4. The panel of Claim 1 wherein the covering aperture defines a perimeter that includes a tab and a covering perimeter section, and wherein the bolster aperture defines a perimeter that includes the pleat notch and a bolster perimeter section, the covering perimeter section and the bolster perimeter section having substantially the same shape.

5. The panel of Claim 4 wherein the perimeter of the bolster aperture further includes a cover notch adjacent to the pleat notch.

6. The panel of Claim 5 wherein the covering defines a thickness, a depth defined by the pleat notch is approximately twice the covering thickness, and a depth defined by the cover notch is approximately the covering thickness.

7. The panel of one of the preceding Claims wherein the bolster includes an alignment groove.

8. The panel of Claim 7 wherein the alignment groove intersects the pleat notch.

9. The panel of one of the preceding Claims wherein the pleated seam includes a back tack that is at least partially folded underneath the bolster.

10. A method of forming a panel for use as a vehicle interior component comprising the steps of:
(a) providing a bolster having a bolster aperture formed therethrough that includes a pleat notch portion;
(b) providing a covering having a covering aperture formed therethrough and including a pleated seam; and
(c) positioning the cover on the bolster such that the covering aperture is aligned with the bolster aperture and the pleated seam is received in the pleat notch portion of the bolster aperture.

11. The method of claim 10 wherein step (b) includes providing a back tack on a portion of the pleated seam and forming a tab from the portion of the pleated seam.

12. The method of Claim 11 wherein step (c) includes passing the tab through the bolster aperture such that the pleated seam is received within the pleat notch portion.

13. The method of one of Claims 10 to 12 wherein step (a) includes providing the bolster aperture with a cover notch portion adjacent to the pleat notch portion.

14. The method of Claim 13 wherein step (a) includes forming the pleat notch portion having a depth that is approximately twice a thickness of the covering and forming the cover notch portion having a depth that is approximately the thickness of the covering.

15. The method of one of Claims 10 to 14 wherein step (a) includes providing a bolster having an alignment groove and forming the bolster aperture through the alignment groove,

16. The method of Claim 15 wherein step (c) includes orienting the pleated notch in line with the alignment groove.
